# EUROPEAN PATENT APPLICATION

(11) **EP 3 352 442 A1**
(43) Date of publication of application: **25.07.2018**
(21) Application number: 18152997.5
(22) Date of filing: 23.01.2018
(51) Int. Cl.: H04N 1/00, G06F 3/0488, G06F 3/0482

(54) **DEVICE HAVING A TOUCH PANEL**

(30) Priority: 24.01.2017 JP 2017010070
(71) Applicant: Seiko Epson Corporation, Tokyo 160-8801 (JP)
(72) Inventor: SEIKE, Hozumi, Suwa-shi, Nagano 392-8502 (JP)
(74) Representative: Miller Sturt Kenyon

(57) **Abstract**

Provided is a device that prevents complicating the operation required to execute a desired process even when the screen changes and the GUI buttons to which the desired process is assigned is not displayed. A multifunction device 1 has a inside touch panel part 41 (touch panel); first to fourth inscribed buttons 23 to 26 (first buttons) outside a inside touch panel part 41; a display controller 61 that displays first to fourth GUI buttons 72 to 75 (second buttons) in the inside touch panel part 41 in the home screen 66 (first state), and does not display first to fourth GUI buttons 72 to 75 in the inside touch panel part 41 in an operating screen 67 (second state); a light emission controller 62 that does not illuminate the first to fourth inscribed buttons 23 to 26 in the first state, and illuminates the first to fourth inscribed buttons 23 to 26 in the second state; and a control module 2 that executes the same process whether the first to fourth inscribed buttons 23 to 26 or first to fourth GUI buttons 72 to 75 are operated.

## Description

### BACKGROUND

### 1. Technical Field

The present invention relates to a device, such as a multifunction device, having a touch panel.

### 2. Related Art

JP-A-2016-167819 describes a device having a touch panel as an input means. The device described in JP-A-2016-167819 is a multifunction device having the functions of a printer and a fax machine. The touch panel includes an LCD or other type of display panel, and a position detection mechanism for detecting the position touched by the user on the display panel (also referred to as the touch position). Buttons are displayed as parts of a graphical user interface (GUI) on the display panel. Operation (touching) a button on the touch panel is detected based on the touch position detected by the position detection mechanism, and the position of the button displayed on the display panel.

Buttons assigned to a process of selecting a copier function, a process of selecting a printer function, and a process of selecting a fax function are displayed on the home screen that is presented first on the touch panel of the multifunction device of JP-A-2016-167819. When the user operates a button, the process assigned to that button starts.

When one of the multiple buttons displayed on the home screen of the touch panel is touched, the display on the touch panel changes to a setup screen for configuring the content of the process assigned to the touched button.

The amount of information that can be displayed on the touch panel is limited. Therefore, when the home screen changes to a setup screen, for example, some of the multiple buttons displayed in the home screen are no longer displayed. This means that to then execute from this state a process (task) assigned to one of the buttons that is not displayed in the setup screen, the user must perform an operation to return the display to the home screen on the touch panel, and then from the home screen operate the specific button assigned to the desired task. The operation required to start the desired process thus becomes complicated.

### SUMMARY

The present invention provides a device that simplifies the operation of executing a desired process.

To achieve the foregoing objective, a device according to the invention includes: a touch panel; a first button outside of the touch panel; a display controller configured to display a second button on the touch panel in a first state, and not display the second button on the touch panel in a second state; and an emission controller configured to not illuminate the first button in the first state, and in the second state illuminate the first button; and a processor configured to execute the same process whether the first button or the second button is operated.

When the display changes from a first state displaying a second button on the touch panel to a second state not displaying the second button on the touch panel, a first button located outside the touch panel and having the same process as the second button assigned thereto emits, improving the visibility of the first button. Therefore, the user can operate the first button outside the touch panel and cause the device to execute a desired process even in the second state when the second button is not displayed on the touch panel. As a result, even when the second button is not displayed on the touch panel because the screen changed, the operation required to execute the process assigned to the second button is not complicated.

In another aspect of the invention, the first button, in the first state, can be made indistinguishable from the surrounding of the first button and difficult to see by the user, and in the second state can be made distinguishable from the surrounding of the first button and easily seen by the user.

In this aspect of the invention, when the second button is displayed on the touch panel, the visibility of the first button is reduced. The user can therefore touch the second button without confusion to execute the desired process.

A device according to another aspect of the invention has: a touch panel; a first button outside of the touch panel; a display controller configured to display a second button on the touch panel in a first state, and not display the second button on the touch panel in a second state; a button controller configured to hide the first button in the first state, and expose the first button in the second state; and a processor configured to execute the same process whether the first button or the second button is operated.

When the display changes from a first state displaying a second button on the touch panel to a second state not displaying the second button on the touch panel, a first button located outside the touch panel and having the same process as the second button assigned thereto is exposed. Therefore, the user can operate the first button outside the touch panel and cause the device to execute a desired process even in the second state when the second button is not displayed on the touch panel. As a result, even when the second button is not displayed on the touch panel because the screen changed, the operation required to execute the process assigned to the second button is not complicated.

In another aspect of the invention, the display controller, in the second state, displays an image different from the second button at the position where the second button is displayed in the first state.

By thus not displaying the second button, the amount of information that can be displayed on the touch panel in the second state can be increased.

In another aspect of the invention, the device also has a status acquisition module that acquires the operating status, and the display controller changes the display of the second button based on the operating status in the first state, and display of the first button does not change in the second state. The operating status of the device can thus be displayed using the display of buttons on the touch panel.

A device according to another aspect of the invention has, as first buttons, multiple first buttons to which different processes are assigned; as second buttons, multiple second buttons to which the processes assigned to the multiple first buttons are respectively assigned; and the multiple first buttons and multiple second buttons are arranged so that the buttons to which the same processes are assigned are in the same order.

Operation is therefore the same when a button to which the desired process is assigned is operated in the group of multiple second buttons displayed on the touch panel, and when a button to which the desired process is assigned is operated in the group of multiple first buttons displayed on the touch panel.

In another aspect of the invention, the second buttons are preferably displayed on the same side of the touch panel as the first buttons. Thus comprised, because the first buttons and second buttons are displayed in relative proximity, the user can easily operate the first buttons in the second state when the second buttons are not displayed.

In another aspect of the invention, the processor preferably disables operation of the first button in the first state.

An process assigned to a first button executing because the user mistakenly touched a first button of which the visibility was reduced can therefore be prevented.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram of a multifunction device according to the invention.
FIG. 2 is a plan view of the touch panel of the multifunction device.
FIG. 3 is a section view of the touch panel through line A-A in FIG. 2.
FIG. 4 shows an example of the home screen displayed on the touch panel.
FIG. 5 illustrates an operating screen displayed on the touch panel.
FIG. 6 is a flow chart of an operation for changing the screen presented on the touch panel.

### DESCRIPTION OF EMBODIMENTS

A multifunction device is described below with reference to the accompanying figures as an example of a device according to the invention.

### General configuration

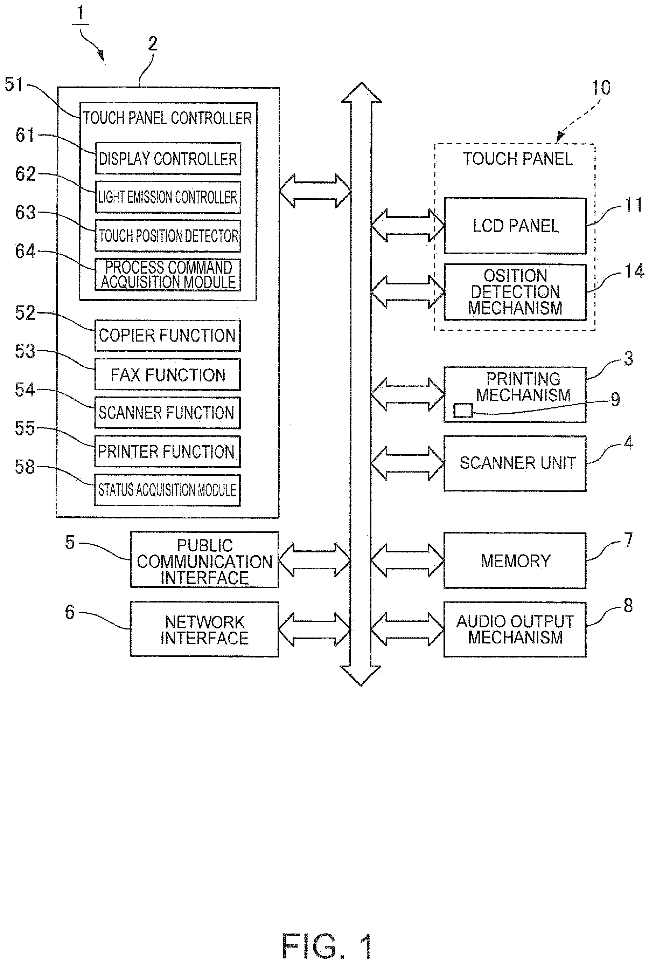

FIG. 1 is a block diagram of a multifunction device according to the invention. The device in this example is a multifunction device 1 having a copier function, fax machine function, scanner function, and printer function. As shown in FIG. 1, the multifunction device 1 has a control module 2 (process module) including a controller (more specifically a CPU, ASIC, or combination thereof), ROM, and RAM. The multifunction device 1 also has a printing mechanism 3, scanner unit 4, public communication interface 5, network interface 6, memory 7, audio output mechanism 8, and optical touch panel 10.

The printing mechanism 3 includes an inkjet head and an ink tank that holds ink supplied to the inkjet head. The printing mechanism 3 also includes a remaining ink detection mechanism 9 that detects how much ink remains in the ink tank. When the remaining ink level goes below a predetermined threshold, the remaining ink detection mechanism 9 outputs to the control module 2 status information indicating that the remaining ink level is low.

The memory 7 in this example is a hard disk drive, and the audio output mechanism 8 is a speaker.

### Touch panel

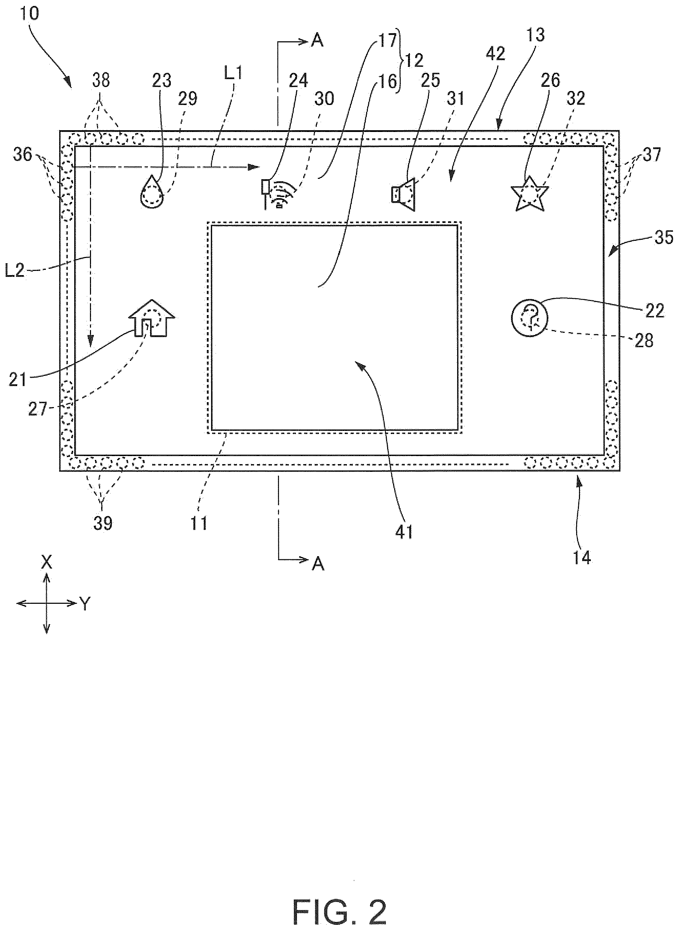

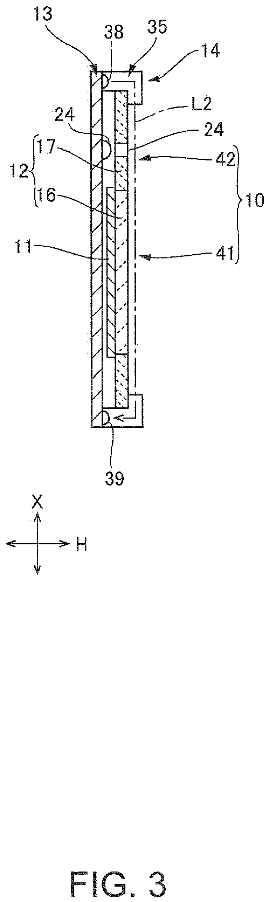

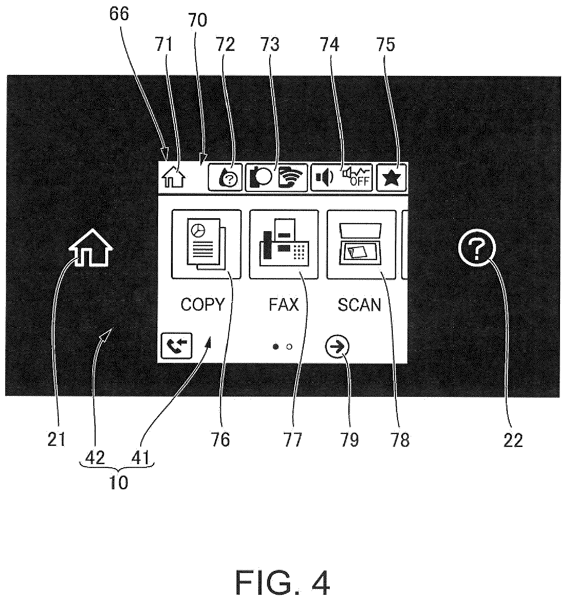

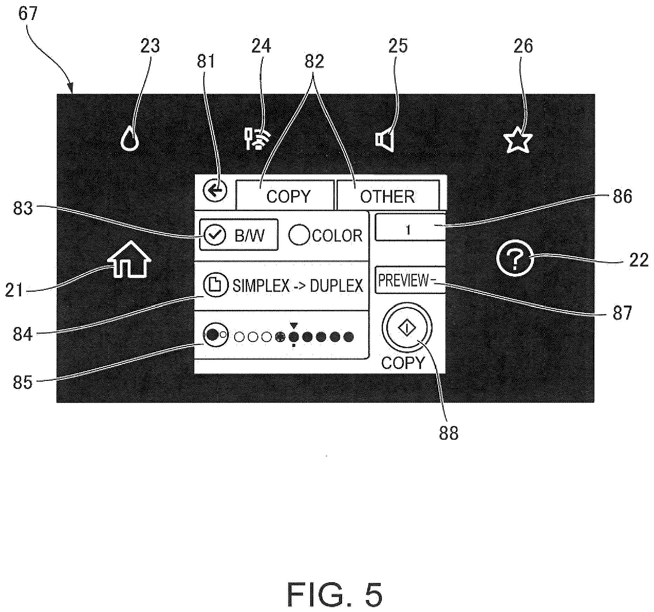

FIG. 2 is a plan view of the touch panel. FIG. 3 is a section view of the touch panel through line A-A in FIG. 2. FIG. 4 shows an example of the home screen displayed on the touch panel. FIG. 5 illustrates an operating screen displayed on the touch panel.

As shown in FIG. 2 and FIG. 3, the touch panel 10 has an LCD panel 11 (display panel), a surface panel 12 disposed to the surface of the LCD panel 11, and a circuit board 13 opposite the surface panel 12 with the LCD panel 11 therebetween. The touch panel 10 also has a position detection mechanism 14 for detecting the touch position of the operation the user performed on the surface panel 12.

The LCD panel 11 has a rectangular screen. The surface panel 12 includes a rectangular transparent panel part 16 on the surface of the LCD panel 11, and a rectangular frame-shaped opaque panel part 17 around the outside edges of the transparent panel part 16. The shape of the transparent panel part 16 corresponds to the shape of the LCD panel 11, and enables seeing the surface of the LCD panel 11.

The circuit board 13 is rectangular and larger than the surface panel 12. When the touch panel 10 is viewed from the direction H in which the LCD panel 11 and surface panel 12 are layered together (referred to below as the layered direction H), the LCD panel 11 is in the middle of the circuit board 13, and the surface panel 12 is inside the perimeter of the circuit board 13. Herein, the short side of the LCD panel 11 is the vertical axis X of the touch panel 10, and the top and bottom of the touch panel 10 correspond to the top and bottom on the vertical axis X as seen in the figures. The long side of the LCD panel 11 is the horizontal axis Y of the touch panel 10, and the left and right sides of the touch panel 10 correspond to the left and right sides on the horizontal axis Y as seen in the figures.

As shown in FIG. 2, an inscribed left button 21 is disposed to the opaque panel part 17 on the left side of the LCD panel 11. The left inscribed button 21 is an illuminated part formed in the shape of a house (home). An inscribed right button 22 is disposed to the opaque panel part 17 on the right side of the LCD panel 11. The inscribed right button 22 is a transparent part in the shape of a circle around a question mark.

A first inscribed button 23, second inscribed button 24, third inscribed button 25, and fourth inscribed button 26 are disposed to the opaque panel part 17 in this order at a regular interval from left to right in the area above the LCD panel 11. The inscribed button 23 is an illuminated icon in the shape of an ink drop. The second inscribed button 24 is an illuminated icon in the shape of radio waves of a wireless network. The third inscribed button 25 is an illuminated icon in the shape of an audio speaker. The fourth inscribed button 26 is an illuminated icon in the shape of a star.

Light-emitting devices 27 to 32 are disposed to the circuit board 13 at positions corresponding to the inscribed buttons 21 to 26 in the layered direction H. More specifically, a left light-emitting device 27 is mounted at a position opposite the inscribed left button 21; a right light-emitting device 28 is mounted at a position opposite the inscribed right button 22; and a first light-emitting device 29, second light-emitting device 30, third light-emitting device 31, and fourth light-emitting device 32 are mounted at positions corresponding respectively to the first to fourth inscribed buttons 23 to 26. In this embodiment, the light-emitting devices 27 to 32 are light-emitting diodes (LEDs).

The position detection mechanism 14 includes a light guide 35 in the shape of a frame around the outside edges of the surface panel 12 (opaque panel part). The position detection mechanism 14 has multiple first position detection light-emitting devices 36 disposed on the left side of the surface panel 12 on the vertical axis X along the left edge of the surface panel 12, and multiple first position detection light-emitting devices 37 disposed on the right side of the surface panel 12 on the vertical axis X along the right edge of the surface panel 12. The position detection mechanism 14 also has multiple second position detection light-emitting devices 38 disposed at the top of the surface panel 12 along the top edge of the surface panel 12 on the horizontal axis Y, and multiple second position detection light-emitting devices 39 disposed at the bottom of the surface panel 12 along the bottom edge of the surface panel 12 on the horizontal axis Y.

The first position detection light-emitting devices 36, first position detection light-emitting devices 37, second position detection light-emitting devices 38, and second position detection light-emitting devices 39 are mounted on the circuit board 13. When seen from the layered direction H, the first position detection light-emitting devices 36, first position detection light-emitting devices 37, second position detection light-emitting devices 38, and second position detection light-emitting devices 39 are at positions superimposed with the light guide 35.

First detection light L1 emitted in the layered direction H from each first position detection light-emitting device 36 to the surface panel 12 side is deflected by the light guide 35, passes on the horizontal axis Y over the surface of the surface panel 12, is deflected by the light guide 35 in the layered direction H to the circuit board 13 side, and reaches the corresponding first position detection light-emitting device 37.

Second detection light L2 emitted in the layered direction H from each second position detection light-emitting device 38 to the surface panel 12 side as shown in FIG. 3 is deflected by the light guide 35, passes on the vertical axis X over the surface of the surface panel 12, is deflected by the light guide 35 to the circuit board 13 side, and reaches the corresponding second position detection light-emitting device 39.

When the first detection light L1 and second detection light L2 is interrupted by the user's finger, for example, on the surface of the surface panel 12, output from the first position detection light-emitting device 37 and second position detection light-emitting device 39 corresponding to the position the user touched on the surface panel 12 drops. Based on the output from the first position detection light-emitting device 37 and second position detection light-emitting device 39, the position detection mechanism 14 can therefore acquire the position touched by the user on the surface of the LCD panel 11.

The touch panel 10 in this example includes an inside touch panel part 41 (touch panel) comprising the LCD panel 11, transparent panel part 16, and position detection mechanism 14; and an outside touch panel part 42 comprising the opaque panel part 17 and position detection mechanism 14.

GUI buttons (second buttons), which are GUI parts, and images and text, are dynamically displayed in the inside touch panel part 41 of the LCD panel 11. Predetermined processes are assigned to the GUI buttons presented on the LCD panel 11. The visibility of the inscribed buttons 21 to 26 (first buttons) in the outside touch panel part 42 changes. More specifically, when the corresponding light-emitting device is off, the inscribed buttons 21 to 26 change to the same state as the surrounding outside touch panel part 42 and become hidden to the user (difficult to see). When the light-emitting device turns on, the inscribed buttons 21 to 26 are illuminated, change to a state different from the surrounding, and become readily visible to the user. Predetermined processes are assigned to the inscribed buttons 21 to 26.

Note that the touch panel 10 may have the first position detection light-emitting devices 36 disposed on the right side of the surface panel 12, and the first position detection light-emitting devices 37 on the left side of the surface panel 12. Similarly, the touch panel 10 may have the second position detection light-emitting devices 38 below the surface panel 12, and the second position detection light-emitting devices 39 above the surface panel 12. The position detection mechanism 14 may also use a different position detection method.

### Control module

As shown in FIG. 1, the control module 2 includes a touch panel controller 51 that controls driving the touch panel 10, and acquires process commands based on operation of the touch panel 10 by the user. The control module 2 also has a copier function 52, fax function 53, scanner function 54, and printer function 55 for implementing functions of the multifunction device 1.

Based on process commands acquired by the touch panel controller 51, the copier function 52 controls driving the scanner unit 4 and printing mechanism 3 to optically read a document and print a copy of the document that was scanned.

Based on process commands acquired by the touch panel controller 51, the fax function 53 controls driving the scanner unit 4 to optically read a document and send a copy of the document that was scanned through the public communication interface 5 to an external device. The fax function 53 also controls driving the printing mechanism 3 to print a received document that was received through the public communication interface 5. The fax function 53 may also store a received document that was received through the public communication interface 5 to memory 7.

Based on process commands acquired by the touch panel controller 51, the scanner function 54 controls driving the scanner unit 4 to optically read a document and store the scanned document to memory 7. Based on process commands acquired by the touch panel controller 51, the scanner function 54 may also control driving the scanner unit 4 to optically read a document and send the scanned document through the network interface 6 to an external device connected through the network.

The printer function 55 controls driving the printing mechanism 3 based on print job data received through the network interface 6 to print the content specified by the print job data.

The control module 2 also has a status acquisition module 58 for acquiring the operating status of the multifunction device 1. The status acquisition module 58 the remaining ink level in the ink tank, the network connection status, and the on/off state of the audio output mechanism 8. More specifically, the status acquisition module 58 acquires the remaining ink level based on status information from the remaining ink detection mechanism 9. The status acquisition module 58 also acquires, at a specific times, the connection status indicating whether or not the multifunction device 1 is connected to the network. The status acquisition module 58 also acquires the changed status of the audio output mechanism 8 whenever the audio output mechanism 8 turns from on to off, or from off to on.

The touch panel controller 51 has a display controller 61, light emission controller 62, touch position detector 63, and process command acquisition module 64 (process units).

The display controller 61 controls driving the LCD panel 11 to display various screens. For example, in the initialized state, the display controller 61 displays a home screen 66 such as shown in FIG. 4.

The home screen 66 has a title area 70 of a specific width across the top edge. Shown in the title area 70 from left to right are an icon 71 in the shape of a house (home) indicating the home screen 66; a first GUI button 72 displayed as an icon in the shape of an ink drop; a second GUI button 73 displayed as an icon in the shape of radio waves of a wireless network; a third GUI button 74 as an icon in the shape of a speaker; and a fourth GUI button 75 as an icon in the shape of a star.

Below the title area 70 are displayed multiple GUI buttons for selecting specific functions. In the example in FIG. 4 are displayed a first function selection GUI button 76 as an icon for the copier function; a second function selection GUI button 77 as an icon for the fax function; and a third function selection GUI button 78 as an icon for the scanner function. Below the function selection GUI buttons 76 to 78 is displayed a scroll GUI button 79 for scrolling the home screen 66 on the horizontal axis Y.

The display controller 61 also displays an operating screen 67 such as shown in FIG. 10 based on the process command acquired by the touch panel controller 51. For example, if the user touches the first function selection GUI button 76, the touch panel controller 51 acquires a process command for executing the copier function. As a result, the display controller 61 displays the operating screen 67 shown in the example in FIG. 5.

Based on the process command acquired by the touch panel controller 51, the display controller 61 displays the appropriate operating screen 67, such as a help screen, ink level display screen, network connection management screen, or audio output management screen. For example, if the user touches the first GUI button 72, the touch panel controller 51 acquires a process command to display the remaining ink level. As a result, the display controller 61 displays the ink level display screen.

The help screen is a screen displaying images or text describing a particular operating method. The remaining ink level display screen shows the ink levels acquired by the status acquisition module 58. The network connection management screen displays the network connection status acquired by the status acquisition module 58, and is used for configuring the network connection. The audio output management screen indicates the status of the audio output mechanism 8 acquired by the status acquisition module 58, and controls for changing the on/off setting or adjusting the volume, for example. The display controller 61 changes the display of GUI parts based on the operating status of the multifunction device 1 acquired by the status acquisition module 58.

The light emission controller 62 controls driving the left LED 27, right LED 28, and first to fourth LEDs 29 to 32. More specifically, the light emission controller 62 holds the left LED 27 and right LED 28 constantly on. The light emission controller 62 controls the on/off state of the first to fourth LEDs 29 to 32 appropriately to the display of GUI parts by the display controller 61.

In this example, when the first GUI button 72, second GUI button 73, third GUI button 74, and fourth GUI button 75 are displayed on the LCD panel 11 (such as when the home screen 66 is displayed as shown in FIG. 4), the light emission controller 62 turns the first to fourth LEDs 29 to 32 off. When the first GUI button 72, second GUI button 73, third GUI button 74, and fourth GUI button 75 are not displayed on the LCD panel 11 (such as when the operating screen 67 is displayed as shown in FIG. 5), the light emission controller 62 turns the first to fourth LEDs 29 to 32 on.

The touch position detector 63 detects the position touched by the user based on output from the first position detection light-emitting devices 37 and second position detection light-emitting devices 39 of the position detection mechanism 14. More specifically, based on the output of the first position detection light-emitting device 37 and second position detection light-emitting device 39 that dropped as a result of the user touching the surface panel 12, the touch position detector 63 acquires the vertical axis X coordinate and the horizontal axis Y coordinate on the surface panel 12.

The process command acquisition module 64 acquires the GUI part the user operated based on the position (coordinates) of the GUI part displayed on the LCD panel 11 by the display controller 61, and the touch position acquired by the touch position detector 63. The process command acquisition module 64 then acquires the process command for executing the process assigned to the identified GUI part.

The process command acquisition module 64 also identifies the inscribed button 21 to 26 operated by the user based on the locations of the inscribed buttons 21 to 26 displayed on the opaque panel part 17, the on/off state of the left LED 27, right LED 28, and first to fourth LEDs 29 to 32, and the touch position acquired by the touch position detector 63. The process command acquisition module 64 then acquires the process command for executing the process assigned to the inscribed button 21 to 26 that was operated when the inscribed buttons 21 to 26 that may be operated are illuminated (that is, when the light-emitting devices 27 to 32 corresponding to the inscribed buttons 21 to 26 are on).

As shown in FIG. 4, a process for displaying remaining ink levels is assigned to the first GUI button 72 shown in the home screen 66. A process for displaying the network status is assigned to the second GUI button 73. A process for displaying the status of the audio output mechanism 8 is assigned to the third GUI button 74. A specific process previously set by the user is assigned to the fourth GUI button 75. More specifically, a process configured as desired by the user is assigned to the fourth GUI button 75. A process for selecting the copier function is assigned to the first function selection GUI button 76. A process for selecting the fax function is assigned to the second function selection GUI button 77. A process for selecting the scanning function is assigned to the third function selection GUI button 78.

A process for displaying the home screen 66 is assigned to the inscribed left button 21 in the outside touch panel part 42. A process for displaying a help screen is assigned to the inscribed right button 22. A process for displaying remaining ink levels is assigned to the inscribed button 23. A process for displaying the network status is assigned to the second inscribed button 24. A process for displaying the status of the audio output mechanism 8 is assigned to the third inscribed button 25. A specific process previously set by the user is assigned to the fourth inscribed button 26.

The first to fourth inscribed buttons 23 to 26 are disposed to a position near the display positions of the first to fourth GUI buttons 72 to 75 in the home screen 66. In other words, the first to fourth GUI buttons 72 to 75 in the home screen 66 are displayed on the same side as the first to fourth inscribed buttons 23 to 26. In addition, the first to fourth GUI buttons 72 to 75 shown in the home screen 66, and the first to fourth inscribed buttons 23 to 26 disposed in the outside touch panel part 42, are arranged so that the buttons to which the same process is assigned appear in the same order from left to right on the horizontal axis Y in each group of buttons.

When the user operates the function selection GUI buttons 76 to 78 to which the processes for selecting the copier function, fax function, and scanning function are assigned in the home screen 66, the process command acquisition module 64 acquires the process command that selects the corresponding function.

When the process command acquisition module 64 acquires the process command, the display controller 61 changes the home screen 66 to the operating screen 67 appropriate to that function. When the user operates the first to third GUI buttons 72 to 74 in the home screen 66, the process command acquisition module 64 acquires process commands for displaying various operating statuses of the multifunction device 1. When the process command acquisition module 64 acquires this process command, the display controller 61 changes the home screen 66 to the appropriate ink level display screen, network connection management screen, or audio output management screen.

When the user operates the fourth GUI button 75 in the home screen 66, the process command acquisition module 64 acquires the process commands for executing the preset process. When the process command acquisition module 64 acquires these process commands, the control module 2 executes the preset process.

When the inscribed left button 21 in the outside touch panel part 42 is enabled (illuminated) and the user operates the inscribed left button 21, the process command acquisition module 64 acquires a process command for displaying the home screen 66. When the process command acquisition module 64 acquires this process command and the home screen 66 is not displayed on the LCD panel 11, the display controller 61 displays the home screen 66. If the home screen 66 is already displayed on the LCD panel 11, the display controller 61 continues displaying the home screen 66.

When the inscribed right button 22 is enabled (illuminated) and the user operates the inscribed right button 22, the process command acquisition module 64 acquires a process command for displaying the help screen. When the process command acquisition module 64 acquires this process command, the display controller 61 displays the help screen.

When the first to third inscribed buttons 23 to 25 in the outside touch panel part 42 are enabled (illuminated) and the user operates the first to third inscribed buttons 23 to 25, the process command acquisition module 64 acquires a process command for displaying various operating statuses of the multifunction device 1. When the process command acquisition module 64 acquires the process command, the display controller 61 changes the home screen 66 to the appropriate ink level display screen, network connection management screen, or audio output management screen.

When the fourth inscribed button 26 in the outside touch panel part 42 is enabled and the user operates the fourth inscribed button 26, the process command acquisition module 64 acquires the process commands for executing the preset process. When the process command acquisition module 64 acquires these process commands, the control module 2 executes the preset process.

The display controller 61 changes the display of the first to third GUI buttons 72 to 74 based on the operating statuses of the multifunction device 1 acquired by the status acquisition module 58. For example, the display controller 61 normally displays an icon in the image of an ink droplet in the first GUI button 72, but when the remaining ink level goes below a threshold, displays an icon warning the user. When the multifunction device 1 is connected to the network, the display controller 61 displays an image indicating a connection in the second GUI button 73, but when the multifunction device 1 to network connection is interrupted, displays an image indicating that the connection is broken. When the audio output mechanism 8 is on, the display controller 61 displays in the third GUI button 74 an image indicating that audio is output from the speaker, and when the audio output mechanism 8 is off, displays an image indicating that audio is not output from the speaker.

### Changing the display on the touch panel

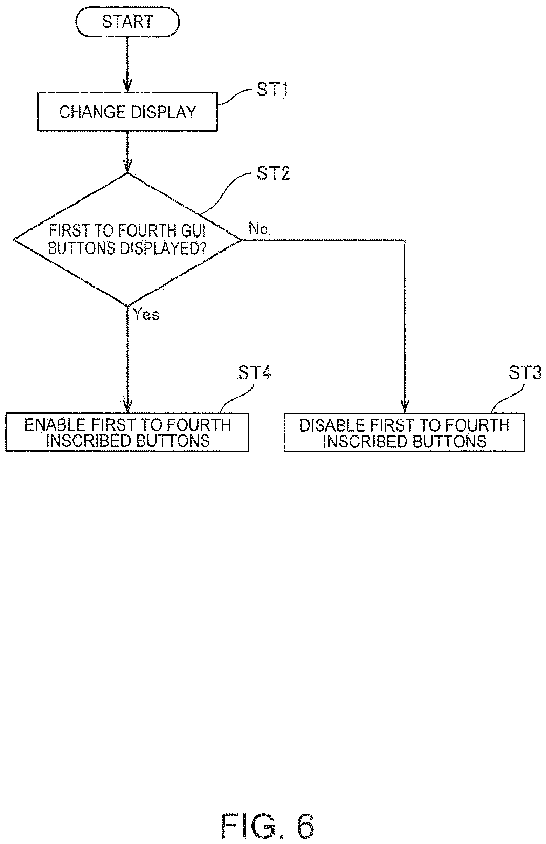

Changing the display on the touch panel 10 is described next with reference to FIG. 4, FIG. 5, and FIG. 6. FIG. 6 is a flow chart of the operation changing the display presented on the touch panel.

When the multifunction device 1 turns on and the touch panel 10 starts operating, the display controller 61 displays the home screen 66 on the inside touch panel part 41 (LCD panel 11) as shown in FIG. 4. In this example, an icon in the shape of an ink droplet (a marking indicating that there is ink) is displayed in the first GUI button 72 in the home screen 66. An icon indicating a network connection is displayed in the second GUI button 73. An icon indicating speaker output is turned off is displayed in the third GUI button 74.

When the display controller 61 is displaying the home screen 66 in the LCD panel 11 (a first state), the light emission controller 62 turns the left LED 27 and right LED 28 on. As a result, the inscribed left button 21 and inscribed right button 22 disposed to the opaque panel part 17 are illuminated and can be easily seen by the user. When the user then operates the inscribed left button 21 or inscribed right button 22, the process command acquisition module 64 acquires the process command for executing the process assigned to the inscribed left button 21 or inscribed right button 22 that was operated. In other words, the inscribed left button 21 and inscribed right button 22 are enabled in this state.

At the same time, the light emission controller 62 turns the first to fourth LEDs 29 to 32 off. The first to fourth inscribed buttons 23 to 26 arrayed along the top of the LCD panel 11 are therefore not illuminated, and are difficult for the user to see. If the user operates one of the first to fourth inscribed buttons 23 to 26, the process command acquisition module 64 does not acquire the process command for executing the process assigned to the first to fourth inscribed buttons 23 to 26 that was operated. In other words, the first to fourth inscribed buttons 23 to 26 are disabled.

When the user operates the first to third function selection GUI buttons 76 to 78 to which processes for selecting the copier function, fax function, and scanning function are assigned in the home screen 66, the process command acquisition module 64 acquires the process commands for selecting the corresponding function. When the process command acquisition module 64 acquires the process command, the display controller 61 changes the home screen 66 to the operating screen 67 appropriate to the selected function. FIG. 5 is an example of the operating screen 67 displayed on the LCD panel 11 in place of the home screen 66 when the first function selection GUI button 76, to which the process for selecting the copier function is assigned, is operated.

As shown in FIG. 5, in this operating screen 67, a Return GUI button 81, which is a GUI part for changing the screen, and two tabs 82 are displayed where the title area 70 is displayed in the home screen 66. In this example, an arrow icon is displayed in the Return GUI button 81. A process for returning the screen shown on the LCD panel 11 to the previous screen is assigned to the Return GUI button 81. Processes for changing the operating screen 67 to a first screen (the screen shown in FIG. 5) for basic settings, and changing to a second screen for applied settings, are assigned to the two tabs 82.

Below the two tabs 82 are displayed first to third GUI operators 83 to 85, which are GUI parts for setting details of the copier function. In this example, a process for selecting monochrome copying or color copying is assigned to the first GUI operator 83; a process for selecting simplex or duplex copying is assigned to the second GUI operator 84; and a process for adjusting the density of the copies is assigned to the third GUI operator 85.

A display area 86 for displaying the number of copies is provided on the right side of the first GUI operator 83. Below the display area 86 are displayed a Preview GUI button 87, to which a process for previewing the document scanned by the scanner unit 4 is assigned, and an Execute (Copy in this example) GUI button 88, to which a process for starting copying is assigned. When the user operates the first to third GUI operators 83 to 85 to set the details for a particular copying job, and then operates the Execute GUI button 88, the process command acquisition module 64 acquires a process command to start copying. When the process command acquisition module 64 acquires this process command, the copier function 52 executes the copy process operation.

As shown in FIG. 6, when changing from a state (first state) in which the home screen 66 is shown on the LCD panel 11 to a state (second state) in which the operating screen 67 is shown on the LCD panel 11 (step ST1), the title area 70 (first GUI button 72, second GUI button 73, third GUI button 74, fourth GUI button 75) are not displayed on the LCD panel 11 (step ST2: No). Therefore, as shown in FIG. 5, the light emission controller 62 turns the first LED 29, second LED 30, third LED 31, and fourth LED 32 on, and illuminates the inscribed button 23, second inscribed button 24, third inscribed button 25, and fourth inscribed button 26 in the outside touch panel part 42. When the user then operates the first to fourth inscribed buttons 23 to 26, the process command acquisition module 64 acquires the commands assigned to the first to fourth inscribed buttons 23 to 26. In other words, the first to fourth inscribed buttons 23 to 26 are enabled (step ST3).

When the operating screen 67 is displayed and the user operates the first to third inscribed buttons 23 to 25, the process command acquisition module 64 acquires the process commands to display the operating status of the multifunction device 1. When the process command acquisition module 64 acquires the process commands, the display controller 61 changes the operating screen 67 to the appropriate ink level display screen, network connection management screen, or audio output management screen according to acquired process command. More specifically, the display controller 61 interrupts the function setup process, and displays the screen corresponding acquired process command. Furthermore, when the fourth inscribed button 26 in the outside touch panel part 42 is enabled and the user operates the fourth inscribed button 26, the process command acquisition module 64 acquires the process commands for executing the preset process. When the process command acquisition module 64 acquires these process commands, the control module 2 interrupts the function setup process, and executes the preset process.

When the operating screen 67 is displayed, the ink level display screen, network connection management screen, or audio output management screen is displayed in response to the user operating the first to third inscribed buttons 23 to 25, and operation in the displayed screen ends or the user commands ending displaying (exiting) the screen, displaying the displayed screen ends, and the display returns to the screen displayed before the user operated the first to third inscribed button 23 to 25. This enables the user to continue operation in the operating screen 67.

When the second function selection GUI button 77 to which a process for selecting the fax function is assigned, or the third function selection GUI button 78 to which a process for selecting the scanning function is assigned, is operated in the home screen 66, an operating screen for configuring the corresponding function is displayed in place of the home screen 66. When the title area 70 (first GUI button 72, second GUI button 73, third GUI button 74, fourth GUI button 75) is not displayed on the LCD panel 11 in the displayed operating screen, the light emission controller 62 turns the first LED 29, second LED 30, third LED 31, and fourth LED 32 on, and illuminates the inscribed button 23, second inscribed button 24, third inscribed button 25, and fourth inscribed button 26 in the outside touch panel part 42. When the light emission controller 62 turns the first LED 29, second LED 30, third LED 31, and fourth LED 32 on, and the user then operates the first to fourth inscribed buttons 23 to 26, the process command acquisition module 64 acquires the commands assigned to the first to fourth inscribed buttons 23 to 26.

The operating screen 67 for each function also has GUI operators to which processes for configuring details of the corresponding function are assigned, and an Execute GUI button to which a process for starting (executing) the function is assigned. When the user operates the Execute GUI button in a particular operating screen, the process command acquisition module 64 acquires a process command for starting that function. When the process command acquisition module 64 acquires the process command, the fax function starts the fax processing function, and the scanning function starts the scanning process operation, based on the process command.

When the inscribed left button 21 is then operated to change from the state displaying the operating screen 67 on the LCD panel 11 (second state) to the state displaying the home screen 66 (first state) (step ST1), the title area 70 (first GUI button 72, second GUI button 73, third GUI button 74, fourth GUI button 75) are displayed on the LCD panel 11 as shown in FIG. 4 (step ST2: Yes). Therefore, the light emission controller 62 turns the first LED 29, second LED 30, third LED 31, and fourth LED 32 off, and the inscribed button 23, second inscribed button 24, third inscribed button 25, and fourth inscribed button 26 in the outside touch panel part 42 go to the same appearance as the surrounding. If the user then operates the first to fourth inscribed buttons 23 to 26, the process command acquisition module 64 does not acquire the commands assigned to the first to fourth inscribed buttons 23 to 26. In other words, the first to fourth inscribed buttons 23 to 26 are disabled (step ST4).

### Operating effect

As described above, when the display changes in this example from a state showing the first to fourth GUI buttons 72 to 75 on the inside touch panel part 41 to a state not showing the first to fourth GUI buttons 72 to 75 on the inside touch panel part 41, first to fourth inscribed buttons 23 to 26 that are disposed to the outside touch panel part 42 and have assigned thereto the same processes assigned to the first to fourth GUI buttons 72 to 75 are enabled. As a result, even when the first to fourth GUI buttons 72 to 75 are not displayed in the inside touch panel part 41, the user can cause the multifunction device 1 to execute a desired process by operating the first to fourth inscribed buttons 23 to 26 in the outside touch panel part 42. The operation required to execute the processes assigned to the first to fourth GUI buttons 72 to 75 is therefore not complicated even when the first to fourth GUI buttons 72 to 75 are not displayed on the inside touch panel part 41 (LCD panel 11) because the screen changed.

The first to fourth inscribed buttons 23 to 26 disposed to the outside touch panel part 42 are located in the home screen 66 at positions near the first to fourth GUI buttons 72 to 75 to which are assigned the same functions as the inscribed buttons 23 to 26. In other words, the first to fourth GUI buttons 72 to 75 are displayed beside the first to fourth inscribed buttons 23 to 26 in the home screen 66. As a result, because the first to fourth inscribed buttons 23 to 26 and first to fourth GUI buttons 72 to 75 are relatively close to each other, when the home screen 66 changes to the operating screen 67, the user can easily operate the inscribed buttons 21 to 26 in the outside touch panel part 42.

In addition, the first to fourth GUI buttons 72 to 75 displayed in the inside touch panel part 41 (LCD panel 11), and the first to fourth inscribed buttons 23 to 26 disposed in the outside touch panel part 42, are arranged so that the buttons to which the same process is assigned appear in the same order from left to right. Operability is therefore the same, and the user will not be confused, when operating the GUI buttons to which the desired process is assigned from among the first to fourth GUI buttons 72 to 75 in the inside touch panel part 41, and when operating the inscribed buttons to which the desired process is assigned from among the first to fourth inscribed buttons 23 to 26 in the outside touch panel part 42.

When the first to fourth GUI buttons 72 to 75 are displayed in the inside touch panel part 41 (LCD panel 11), the visibility of the first to fourth inscribed buttons 23 to 26 is reduced. The user can therefore execute the desired process by touching the first to fourth GUI buttons 72 to 75 with no confusion.

In the operating screen 67, the display controller 61 displays images different from the first to fourth GUI buttons 72 to 75 where the first to fourth GUI buttons 72 to 75 are displayed in the home screen 66. By thus not displaying the first to fourth GUI buttons 72 to 75, the amount of information that can be displayed on the inside touch panel part 41 (LCD panel 11) can be increased in the operating screen 67.

Furthermore, in this example, the display controller 61 changes displaying the first to fourth GUI buttons 72 to 75 based on the operating status of the multifunction device 1. The operating status of the multifunction device 1 can therefore be displayed using the presentation of the GUI buttons in the inside touch panel part 41 (LCD panel 11).

Furthermore, when the light emission controller 62 has turned off the first to fourth LEDs 29 to 32, and lowered the visibility of the first to fourth inscribed buttons 23 to 26, the process command acquisition module 64 disables the first to fourth inscribed buttons 23 to 26. An unintended process executing because the user mistakenly touched a first to fourth inscribed button 23 to 26 of which the visibility was reduced can therefore be prevented.

### Other embodiments

The invention is described above with application to a multifunction device 1, but the invention can be applied to other devices having a touch panel 10. For example, the invention could be applied to a single-function printer having only a printing capability, a single-function fax machine having only a fax capability, a single-function scanner having only a scanning capability, and other devices that do not have a printing function.

Physical input buttons may also be used in the outside touch panel part 42 instead of some or all of the inscribed left button 21, inscribed right button 22, and first to fourth inscribed buttons 23 to 26. In this case, in the first state displaying the first to fourth GUI buttons 72 to 75 on the inside touch panel part 41, the physical input button corresponding to the first to fourth inscribed buttons 23 to 26 could be hidden by a shutter mechanism, for example. The control module 2 may also include a button controller, and when the first to fourth GUI buttons 72 to 75 are not displayed on the inside touch panel part 41, drive the shutter mechanism to release and expose the input buttons.

The foregoing embodiment describes using an optical touch panel, but a capacitive or other type of touch panel may be used instead.

Further alternatively, when changing from a state displaying the first to fourth GUI buttons 72 to 75 on the inside touch panel part 41 to a state not displaying the first to fourth GUI buttons 72 to 75 on the inside touch panel part 41, animation showing the first to fourth GUI buttons 72 to 75 moving toward the first to fourth inscribed buttons 23 to 26 may be displayed; and when changing from a state not displaying the first to fourth GUI buttons 72 to 75 on the inside touch panel part 41 to a state displaying the first to fourth GUI buttons 72 to 75 on the inside touch panel part 41, animation showing the first to fourth inscribed buttons 23 to 26 moving toward the first to fourth GUI buttons 72 to 75 may be displayed. This configuration makes the correlation between the first to fourth GUI buttons 72 to 75 and the first to fourth inscribed buttons 23 to 26 more apparent to the user. The invention being thus described, it will be obvious that it may be varied in many ways. Such variations are not to be regarded as a departure from the scope of the invention, and all such modifications as would be obvious to one skilled in the art are intended to be included within the scope of the following claims.

## Claims

1. A device comprising:
a touch panel;
a first button outside of the touch panel;
a controller configured to hide the first button and display a second button on the touch panel in a first state, and expose the first button and not display the second button on the touch panel in a second state; and
an emission controller configured to not illuminate the first button in the first state, and in the second state illuminate the first button;
the controller starting the same process whether the first button or the second button is operated.

2. The device described in claim 1, wherein:
the first button, in the first state, is not illuminated, indistinguishable from the surrounding of the first button, and difficult to see by the user, and
in the second state, is illuminated and thereby distinguishable from the surrounding of the first button and easily seen by the user.

3. The device described in claim 1, wherein:
the controller, in the second state, displays an image different from the second button at the position where the second button is displayed in the first state.

4. The device described in claim 3, wherein:
the controller, when changing from the first state to the second state, displays on the touch panel animation moving the second button toward the first button.

5. The device described in claim 1, wherein:
the controller changes the display of the second button in the first state based on the operating status of the device; and
display of the first button does not change in the second state.

6. The device described in claim 1, further comprising:
as first buttons, multiple first buttons to which different processes are assigned;
as second buttons, multiple second buttons to which the processes assigned to the multiple first buttons are respectively assigned;
the multiple first buttons and multiple second buttons being arranged so that the buttons to which the same processes are assigned are in the same order.

7. The described in claim 6, wherein:
the second buttons are displayed on the same side of the touch panel as the first buttons to which the same processes are assigned.

8. The device described in claim 1, wherein:
the controller disables operation of the first button in the first state.
